# EUROPÄISCHE PATENTSCHRIFT

(11) **EP 0 801 294 B1**
(45) Veröffentlichungstag und Bekanntmachung des Hinweises auf die Patenterteilung: **16.06.1999**
(21) Anmeldenummer: 97105505.8
(22) Anmeldetag: 03.04.1997
(51) Int. Cl.: G01L 23/22, F02P 17/12

(54) **Hochfrequente Ionenstrommessung nach Wechselstromzündung**
High frequency ion current measurement after AC current ignition
Mesure de courant d'ions à haute fréquence après allumage à courant alternatif

(30) Priorität: 11.04.1996 DE 19614287
(43) Veröffentlichungstag der Anmeldung: 15.10.1997
(73) Patentinhaber: TEMIC TELEFUNKEN microelectronic GmbH, 74072 Heilbronn (DE)
(72) Erfinder: Breu, Gunther, 90491 Nürnberg (DE)
(74) Vertreter: Maute, Hans-Jürgen, Dipl.-Ing.

(56) Entgegenhaltungen:
- DE-A- 3 327 766
- DE-A- 3 928 726

## Beschreibung

Die Erfindung betrifft ein Verfahren zur Steuerung einer Zündvorrichtung einer Brennkraftmaschine mit einer Meßphase zur lonenstrommessung gemäß dem Oberbegriff des Patentanspruches 1, wie es aus der gattungsbildenden, nicht vorveröffentlichten Druckschrift DE 195 24 539 (DE-C1-195 24 539 veröffentlicht am 28.11.96) bekannt ist und die zur Klopferkennung dient.

Als Klopfen werden bei einer Brennkraftmaschine unerwünschte Verbrennungsprozesse bezeichnet, die in der Regel durch Selbstzündungen des Kraftstoffes verursacht werden und ein klopfähnliches Motorgeräusch erzeugen. Neben einer Leistungsreduzierung, einer Zunahme des Kraftstoffverbrauches und der Abgasemissionen, können durch das Motorklopfen gravierende Motorschäden verursacht werden. Eine Möglichkeit Motorklopfen zu detektieren, ist das Durchführen einer lonenstrommessung im Brennraum einer Brennkraftmaschine.

Eine Schaltungsanordnung zur lonenstrommessung im Zusammenwirken mit einer konventionellen Transistorzündung ist bereits aus der Druckschrift DE 33 27 766 A1 bekannt. Dazu ist im Brennraum jedes Zylinders eine gleichzeitig als lonenstromsonde dienende Zündkerze angeordnet. Auf der Primärseite der Zündspule wird von einem Erregungsspannungsgenerator eine impulsförmige Wechselspannung erzeugt, die der Steuerelektrode des Zündtransistors zugeführt, und sekundärseitig über die Zündkerze in den Brennraum eingekoppelt wird.

Die impulsförmige Wechselspannung wird in Abhängigkeit des Brennraumdruckes moduliert, sekundärseitig ausgekoppelt und in einer Auswerteschaltung bearbeitet.

Diese bekannte Schaltungsanordnung verbindet eine lonenstrommessung mit einer herkömmlichen Transistorzündung. Bei einer Transistorzündung kann der Zündzeitpunkt und die Dauer des Zündfunkens nur sehr begrenzt verändert werden. Bei einer Motordrehzahl von ca. 6000 Umdrehungen pro Minute beträgt die Brenndauer der Zündkerze etwa 1 ms, wobei die Kurbelwelle sich um ca. 36 Grad weiter dreht (ca. 20% des Verbrennungstaktes). Während dieser Zeitspanne kann die lonenstrommessung nicht durchgeführt werden, wodurch die Erkennung von unregelmäßigen Druckverläufen stark beeinträchtigt wird.

Eine Verminderung dieses Problems kann durch die Verbindung der lonenstrommessung mit der Wechselstromzündung erreicht werden.

Ein Wechselstromzündung ist beispielsweise aus der Druckschrift DE 39 28 726 A1 bekannt. Dieses Zündsystem weist eine selbstschwingende Zündendstufe und eine Vorrichtung zur statischen und/oder dynamischen Erfassung des Zündwinkels auf. Die Zündendstufe, die eine Zündspule mit Primär- und Sekundärwicklung, einen Kondensator, einen steuerbaren Halbleiterschalter und eine im Stromkreis der Sekundärwicklung angeordnete Zündkerze aufweist, erzeugt einen Wechselzündstrom, welcher der Zündkerze kontrollierbar zugeführt wird. Das ermöglicht die freie Einstellung des Brennzeitpunktes und der Brenndauer des Zündfunkens einer Zündkerze.

Eine Schaltungsanordnung zur lonenstrommessung und zur Wechselstromzündung, wurde bereits in der oben genannten Druckschrift DE 195 24 539 beschrieben. Dabei ist auf der Primärseite der Zündspule ein L/C Resonanzkreis angeordnet, der während der Zündphase eine Wechselspannung mit einer für die Zündung benötigten Frequenz generiert, die während der Meßphase mit einer entsprechenden kleinen Amplitude für die lonenstrommessung genutzt wird. Auf der Basis einer Wechselstromzündung läßt sich die Brenndauer des Zündfunkens so weit reduzieren, daß auch bei hohen Motordrehzahlen eine aussagekräftige lonenstrommessung durchgeführt werden kann.

Es ist ein geringer Frequenzabstand zwischen der Resonanzfrequenz des Schwingkreises und dem Frequenzspektrum des Motorklopfens vorhanden. Die Resonanzfrequenz ist an die Anforderungen der Zündung angepaßt und beträgt ca. 20 kHz, während das Motorklopfen ein Frequenzspektrum von 8 18 kHz aufweist. Eine Demodulierung dieser beiden Frequenzen ist nur mit sehr großem Aufwand möglich.

Der Erfindung liegt die Aufgabe zugrunde, das eingangs gennante Verfahren im Hinblich auf eine Reduzierung der Abhängigkeit der sekundärseitigen, sinusförmigen Wechselspannung von der momentanen Belastung des Sekundärkreises auszubilden. Diese Aufgabe wird erfindungsgemäß durch die Merkmale im kennzeichnenden Teil des Patentanspruchs 1 gelöst.

Da beim Betrieb der Schaltungsanordnung mit hoher Versorgungsspannung die Dauer der einzelnen Rechteckstromimpulse zur Erzeugung der Wechselspannung mit der zweiten Frequenz sehr kurz sein muß (einige hundert Nanosekunden), und dies schaltungstechnisch nur mit hohem Aufwand zu realisieren ist, sieht eine vorteilhafte Weiterbildung vor, daß während der Meßphase die Versorgungsspannung der Schaltungsanordnung auf die Batteriespannung oder eine andere verfügbare Spannung reduziert wird.

Die Reduzierung der Versorgungsspannung der Schaltungsanordnung während der Meßphase erfolgt ebenfalls, um die Amplitude der sekundärseitigen, sinusförmigen Wechselspannung zur Erzeugung eines lonenstromes soweit zu reduzieren, daß keine unerwünschten Überschläge an der Zündkerze während der lonenstrommessung entstehen.

Im folgenden soll die Erfindung anhand von Ausführungsbeispielen im Zusammenhang mit den Figuren dargestellt und erläutert werden. Es zeigen:
- Figur 1: ein Blockschaltbild der erfindungsgemäßen Schaltungsanordnung zur Ionenstrommessung,
- Figur 1a: ein Schaltbild eines Ausführungsbeispieles der in Figur 1 gezeigten Meßanordnung 4,
- Figur 2: eine schematische Darstellung der Zündspule mit den für die Zündphase und Meßphase erforderlichen Wechselspannungen.
- Figur 3: ein Zeit-Spannungs-Diagramm mit den während der Meßphase gebildeten, sekundärseitigen Wechselspannungen.

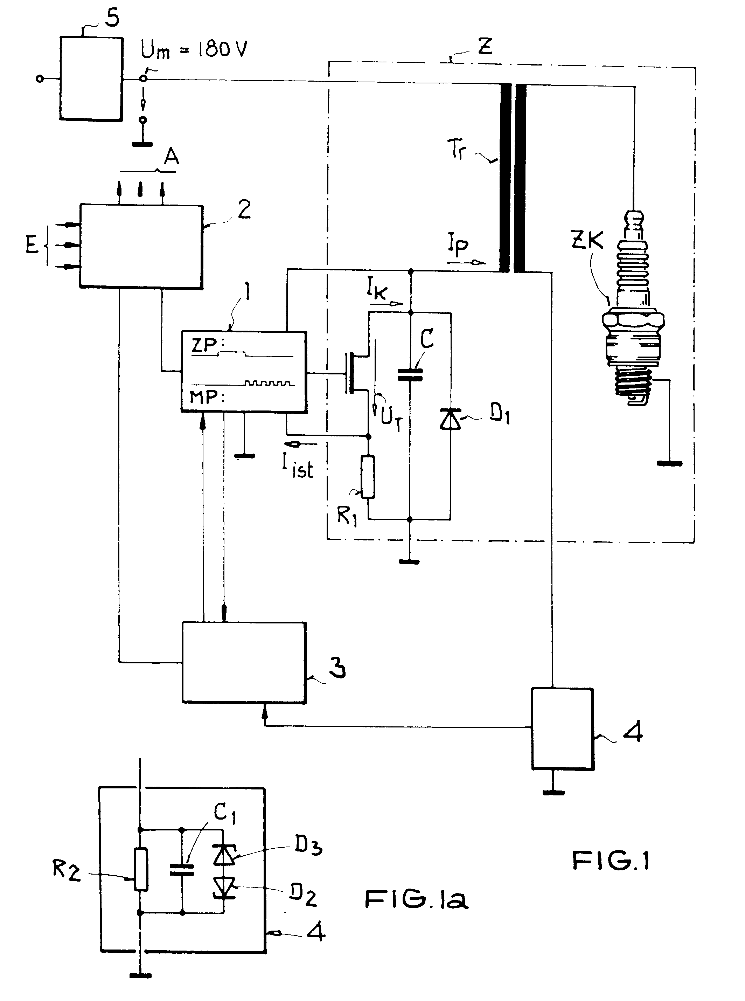

In den Figuren 1, 2 und 3 ist die dargestellte Schaltungsanordnung der Einfachheit halber mit nur einer Zündendstufe Z und mit einer Zündkerze Zk gezeichnet.

Bei mehrzylindrigen Brennkraftmaschinen besteht durch die sequentielle Ansteuerung der Zündkerzen Zk die Möglichkeit, bestimmte Teile der Schaltungsanordnung für aller Zylinder gemeinsam zu nutzen, während andere Teile für jeden Zylinder separat vorhanden sein müssen.

Die Zündendstufe Z gemäß der Figur 1 enthält eine Zündspule Tᵣ mit Primär- und Sekundärwicklung, wobei an die Sekundärwicklung die schon genannte Zündkerze Zk angeschlossen ist. Die Primärwicklung ist mit ihrem einen Anschluß mit einer Versorgungsspannung U_{V} und mit ihrem anderen Anschluß mit dem Kondensator C zur Bildung eines Schwingkreises verbunden. Parallel zu dem Kondensator C ist eine Energierückgewinnungsdiode D₁ sowie eine Serienschaltung aus einem Zündtransistor T und einem Stromshunt R₁ geschaltet. Der Zündtransistor T erhält Steuersignale von einer Steuereinheit 1, die auch zur Erfassung des Ist-Wertes des über diesen Zündtransistor T fließenden Stromes mit dem Shuntwiderstand R₁ verbunden ist. Die Steuereinheit 1 enthält einen Impulsgenerator sowie eine Schaltung zur Formung von Rechtecksignalen.

Eine Regelschaltung 2 übernimmt die Funktion eines Motormanagements, und ist mit der Steuereinheit 1 verbunden, um über diese Verbindung für eine korrekte Zündverteilung zu sorgen. Hierzu werden dieser Regelschaltung 2 über einen Eingang E Motorparameter, wie Last, Drehzahl und Temperatur zugeführt. Entsprechende Aktuatoren werden über Ausgänge A gesteuert.

Die Zündendstufe Z arbeitet im stromkontrollierten Sperr- und Durchflußwandlerbetrieb. Für die Dauer des Einschaltvorganges des Zündtransistors T für eine erste Zündphase fließt ein Kollektorstrom Iₖ, der dem Primärspulenstrom Iₚ entspricht. Dieser Kollektorstrom Iₖ wird durch die Steuereinheit 1 auf einen bestimmten Wert Iₛₒₗₗ begrenzt. Um eine kurze Ladezeit zu erreichen, wird die Primärspule der Zündspule Tᵣ mit einer von einem Schaltnetzteil 5 erzeugten Versorgungsspannung U_{V} =180 Volt gespeist. Das Schaltnetzteil 5 seinerseits wird von der Bordspannung U_{B} versorgt. Hat der Kollektorstrom Iₖ den durch Iₛₒₗₗ vorgegebenen Wert erreicht, wird der Zündtransistor T abgeschaltet. Die in der Primärspule enthaltene Energie regt die Sekundärseite der Zündspule Tᵣ (Sekundärinduktivität, Zündkerzenkapazität) zum Schwingen an. Aufgrund der 50% 'igen Kopplung zwischen der Primärspule und der Sekundärspule der Zündspule Tᵣ wird ein Teil der Energie auf der Primärseite der Zündspule Tᵣ in den Kondensator C transferiert und der andere Teil auf der Sekundärseite der Zündspule Tᵣ in die Zündkerzenkapazität.

Die Spannung am Kondensator C und die Zündspannung an der Zündkerze Zk steigen sinusförmig an, bis keine Energie mehr in der Primärspule vorhanden ist. Nun wird die im Kondensator C gespeicherte Energie wieder der Primärseite der Zündspule Tᵣ zugeführt, bis die Spannung am Kondensator C den Wert 0 erreicht. Diese Schwingung bildet die primärseitige Wechselspannung mit der ersten Frequenz für die Zündphase Upr_{ZP}. Zu diesem Zeitpunkt gibt die Zündspule Tᵣ sekundärseitig ihre vorhandene Energie in die Zündkerzenkapazität ab (Zündfunken). Primärseitig ist dies analog für den Kondensator C nicht möglich, da die Spannung am Kollektor des Zündtransistors T aufgrund der leitend gewordenen Energierückgewinnungsdiode D₁ nicht negativ werden kann. Die in der Primärinduktivität vorhandene Energie wird daher über diese Diode D₁ ins Bordnetz zurückgeliefert. Sekundärseitig läuft die Schwingung aufgrund der nur ca. 50% 'igen Kopplung zwischen Primär- und Sekundärinduktivität weiter, und bildet die sekundärseitige Wechselspannung der Zündphase Usek_{ZP}. Während dieses Zeitabschnittes wird der Zündtransistor T wieder eingeschaltet, da nunmehr die gleichen Spannungsverhältnisse wie vor dem ersten Einschalten des Zündtransistors T vorliegen. Durch die Stromkontrolle wird der Primärspule immer die gleiche Energie zugeführt. Der Anteil der eingespeisten Energie, der nicht im Funkenkanal benötigt wurde, wird wieder vollständig in das Bordnetz zurückgespeist. Die Kopplung von ca. 50% verhindert bei einem Funkendurchbruch eine totale Bedämpfung des Primärschwingkreises durch den stark gedämpften Sekundärschwingkreis. Das Einschalten des Zündtransistors T durch die Steuereinheit 1 erfolgt genau so oft bzw. so lange, bis die gewünschte Funkenbrenndauer der Zündkerze Zk erreicht ist.

Unmittelbar nach der Beendigung einer Zündphase wird der Zündtransistor T von der Steuereinheit 1 zur Durchführung der lonenstrommessung innerhalb der Meßphase mit Rechteckstromimpulsen hoher Frequenz angesteuert. Ein Schwingkreis zur Erzeugung und Formung von Kleinsignal Rechteckimpulsen mit einer geeigneten Verstärkerstufe ist innerhalb der Steuereinheit 1 implementiert. Die Rechteckstromimpulse schalten den Zündtransistor T stetig ein und aus.

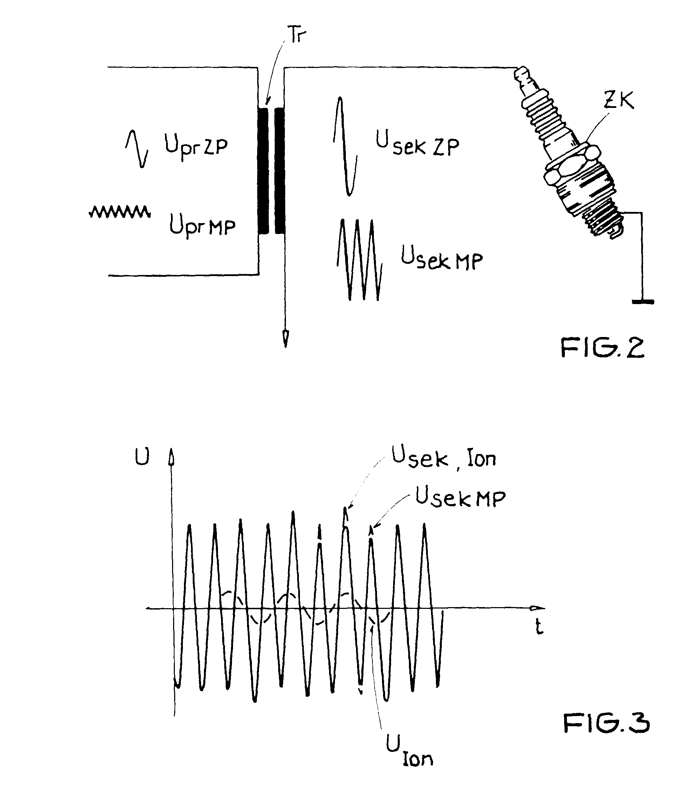

Die freie Ausbildung einer Schwingung auf der Primärseite der Zündspule Tᵣ wird dadurch unterdrückt, daß, noch vor dem Transferieren des kopplungsbedingten Energieanteils in den Kondensator C, der Zündtransistor T einen weiteren Enerigieimpuls an die Primärwicklung der Zündspule Tᵣ leitet. Dadurch kommt es auf der Primärseite der Zündspule Tᵣ zu einem dreieckförmigen Stromverlauf Ipr_{MP} mit einer zweiten Frequenz, der auf der Sekundärseite der Zündspule Tᵣ eine näherungsweise sinusförmige Wechselspannung Usek_{MP} induziert. Die Amplitude der sekundärseitigen Wechselspannung Usek_{MP} ist so ausgelegt, daß sie sekundärseitig keine Zündfunken herbeiführen kann, z.B. 1 kV (vgl. Figur 2). Dazu kann beispielsweise die Versorgungsspannung U_{V} primärseitig auf 12 Volt oder eine andere verfügbare Bordspannung U_{B} umgeschaltet werden. Sekundärseitig bewirkt die Wechselspannung Usek_{MP} mit der zweiten Frequenz einen Stromfluß über die ionisierte Zündfunkenstrecke. Dabei bewirken Schwankungen im Brennraumdruckverlauf Veränderungen des lonenstromes, die wiederum eine Amplitudenmodulation der sekundärseitigen Wechselspannung Usek_{MP} zur Folge haben, die in der Figur 2 als Usek_{Ion} bezeichnet ist. Die Spannungsgrößen Upr_{ZP}, Usek_{ZP}, Ipr_{MP}, Usek_{MP} sind zur Veranschaulichung in Figur 2 dargestellt. Die Spannungsgrößen Usek_{MP}, Usek_{Ion} und das eigentliche lonenstromsignal U_{Ion} sind zur Verdeutlichung in dem Zeit-Spannungs-Diagramm in der Figur 3 dargestellt, wobei U_{Ion} der Einfachheit halber sinusförmig gezeichnet ist.

Der Frequenzabstand zwischen der sekundärseitigen Wechselspannung Usek_{MP} mit der zweiten Frequenz und dem Frequenzspektrum des lonenstromsignales U_{Ion} sollte möglichst groß sein, da dies die Auskopplung des lonenstromsignales U_{Ion} von der amplitudenmodulierten, sekundärseitigen Wechselspannung Usek_{MP} erleichtert. Bei einem Klopfspektrum von üblicherweise 8 - 18 kHz sollte die Frequenz der für die Meßphase erzeugten, sekundärseitigen Wechselspannung Usek_{MP} 50 -100 kHz betragen. Diesen Fall zeigt Figur 3, wo bei den niedrigen Frequenzen des lonenstromsignales U_{Ion} die Frequenz der sekundärseitigen Wechselspannung Usek_{MP} sehr viel höher liegt. Hierbei ist die Möglichkeit einer einfachen Auskopplung des lonenstromsignales U_{Ion} von der amplitudenmodulierten, sekundärseitigen Wechselspannung Usek_{Ion} mittels eines Tiefpasses gegeben.

Die amplitudenmodulierte Wechselspannung Usek_{Ion} wird mit Hilfe einer Meßanordnung 4 am stromschwachen Ende der Sekundärwicklung der Zündspule Tᵣ abgegriffen. Die Auskopplung kann mittels eines hochohmigen Widerstandes, einer Koppelspule, eines Kondensators, eines Halbleiterbauelementes oder einer Kombination dieser Elemente erfolgen, wie dies in Figur 1a mit einem Widerstand R₂, einem Kondensator C1 und zwei in Reihe geschalteten Z-Dioden D₂ und D₃ gezeigt ist.

In der Auswerteschaltung 3 gemäß der Figur 1 erfolgt die Aufbereitung der amplitudenmodulierten Wechselspannung Usek_{Ion} um das eigentliche Ionenstromsignal U_{Ion} zu erhalten. Die Aufbereitung erfolgt beispielsweise mit einem Demodulator und einem oder mehreren Filtern. Das lonenstromsignal U_{Ion} wird sowohl der Steuereinheit 1 als auch der Regelschaltung 2 zugeführt. Die Steuerung der Erfassung der lonenstromsignale U_{Ion} in der Auswerteschaltung 3 erfolgt über eine Verbindungsleitung von der Steuereinheit 1 zur Auswerteschaltung 3. Dabei werden Zündimpulse ausgeblendet, indem die Steuereinheit 1 die Information über die Dauer der Meßphase an die Auswerteschaltung 3 weiterleitet.

Aus dem der Steuereinheit 1 zugeführten lonenstromsignal U_{Ion} können auch Informationen über den Verbrennungsvorgang und das Motorverhalten abgeleitet werden, um hieraus Regelgrößen zur Steuerung der Wechselstromzündung abzuleiten.

So kann eine Klopfsignalauswertung durchgeführt werden, die zu einer Regelung des Zündzeitpunktes führt und keinen störgeräuschanfälligen Körpersensor erfordert. Weiterhin kann mit der Information über den Verbrennungsvorgang eine Zündenergiesteuerung durchgeführt werden, insbesondere kann der Zylinderdruck bestimmt werden, der mit in die Lambda-Regelung und Einspritzsteuerung eingeht. Weiterhin kann aus dem lonenstromsignal U_{Ion} eine Zylinder-1-Erkennung abgeleitet werden. Ferner lassen sich Zündaussetzer erkennen, die Schäden am Katalysator verursachen können. Schließlich kann aus dem lonenstromsignal U_{Ion} eine Lasterkennung abgeleitet werden, um hieraus eine Laufruhenregelung der Brennkraftmaschine durchzuführen.

Bei auf der Primärseite der Zündspule fest eingekoppelten Rechteckstromimpulsen hängt die sekundärseitige, sinusförmige Wechselspannung stark von der momentanen Belastung des Sekundärseite ab. Zur Kompensation kann die Pulsbreite der Rechteckstromimpulse bei gleichbleibender Frequenz mittels eines Regelkreises beeinflußt werden, wobei für die Regelung beispielsweise die Spitzenspannung des Kondensators C verwendet werden kann, um die für eine direkte Regelung der Sekundärspannung nötigen Hochspannungsbauteile zu vermeiden.

## Patentansprüche

1. Verfahren zur Steuerung einer Zündvorrichtung einer Brennkraftmaschine mit einer Meßphase zur lonenstrommessung im Verbrennungsraum der Brennkraftmaschine und mit einer Zündphase zur Wechselstromzündung, wobei während der Zündphase eine Steuereinheit (1) einen im Primärkreis einer Zündspule (Tᵣ) angeordneten Zündtransistor (T) derart ansteuert, daß mittels eines primärseitigen Schwingkreises aus einem Kondensator (C) und der Primärwicklung der Zündspule (Tᵣ) im Sekundärkreis der Zündspule (Tᵣ), der eine während der Meßphase zusätzlich als lonenstromsonde dienende Zündkerze (ZK) aufweist, eine Wechselspannung (Upr_{ZP}) mit einer für die Zündung benötigten ersten Frequenz generiert wird, dadurch gekennzeichnet, daß während der Meßphase der Zündtransistor m von der Steuereinheit (1) hochfrequent mit Rechteckstromimpulsen angesteuert wird, wobei im Primärkreis der Zündspule (Tᵣ) ein dreieckförmiger Strom (Ipr_{MP}) eingeprägt wird, durch den im Sekundärkreis der Zündspule (Tᵣ) zur lonenstrommessung eine sinusförmige Wechselspannung (Usek_{MP}) mit einer zweiten Frequenz erzeugt wird, und daß zur Reduzierung der Abhängigkeit der sekundärseitigen, sinusförmigen Wechselspannung (Usek_{MP}) von der momentanen Belastung des Sekundärkreises die Pulsbreite der Rechteckstromimpulse bei gleichbleibender zweiter Frequenz geregelt wird.

2. Verfahren nach Anspruch 1, dadurch gekennzeichnet, daß die Versorgungsspannung (U_{V}) der Zündvorrichtung während der Meßphase geringer als während der Zündphase vorgegeben wird.

## Claims

1. A method of controlling an ignition device of an internal combustion engine having a measurement phase for the ionic current measurement in the combustion chamber of the internal combustion engine and having an ignition phase for the a.c. ignition, wherein during the ignition phase a control unit (1) controls an ignition transistor (T) arranged in the primary circuit of an ignition coil (Tr) in such manner that, by means of a primary-side oscillating circuit comprising a capacitor (C) and the primary winding circuit comprising a capacitor (C) and the primary winding of the ignition coil (Tr), in the secondary circuit of the ignition coil (T₁), which comprises a spark plug (ZK) additionally serving as ionic current probe during the measurement phase, an a.c. voltage (Upr_{zp}) with a first frequency required for the ignition is generated, characterised in that during the measurement phase the ignition transistor (T) is controlled by the control unit (1) at a high frequency with square-wave current pulses, where a triangular current (Ipr_{MP})is impressed in the primary circuit of the ignition coil (Tᵣ), by means of which current, for the ionic current measurement, a sinusoidal a.c. voltage (Usek_{MP}) with a second frequency is generated in the secondary circuit of the ignition coil (Tᵣ), and that to reduce the dependency of the secondary-side, sinusoidal a.c. voltage (Usek_{MP}) the instantaneous load of the secondary circuit, the pulse width of the square-wave current pulses is regulated at a constant second frequency.

2. A method according to Claim 1, characterised in that the supply voltage (U_{V}) of the ignition device is preset to be smaller during the measurement phase than during the ignition phase.

## Revendications

1. Procédé pour commander un dispositif d'allumage d'un moteur à combustion interne, comportant une phase de mesure pour la mesure du courant ionique dans la chambre de combustion du moteur à combustion interne et une phase d'allumage pour l'allumage à courant alternatif, selon lequel pendant la phase d'allumage une unité de commande (1) commande un transistor d'allumage (T) disposé dans le circuit primaire d'une bobine d'allumage (Tᵣ) de telle sorte qu'une tension alternative (Upr_{ZP}) ayant une première fréquence nécessaire pour l'allumage est générée au moyen d'un circuit oscillant situé côté primaire et constitué par un condensateur (C) et par l'enroulement primaire de la bobine d'allumage (Tᵣ) dans le circuit secondaire de la bobine d'allumage (Tᵣ) qui possède une bougie d'allumage (ZK) utilisée en supplément en tant que sonde du courant ionique pendant la phase de mesure, caractérisé en ce que pendant la phase de mesure, le transistor d'allumage (T) est commandé à haute fréquence par l'unité de commande (1) avec des impulsions de courant rectangulaires, auquel cas dans le circuit primaire de la bobine d'allumage (Tᵣ) est injecté un courant de forme triangulaire (Ipr_{MP}), au moyen duquel une tension alternative de forme sinusoïdale (Usek_{MP}) ayant une seconde fréquence est produite dans le circuit secondaire de la bobine d'allumage (Tᵣ) pour la mesure du courant ionique, et que la largeur des impulsions de courant rectangulaires est réglée, alors que la seconde fréquence reste constante, pour réduire la dépendance de la tension alternative de forme sinusoïdale (Usek_{MP}), situé côté secondaire, vis-à-vis de la sollicitation instantanée appliquée au circuit secondaire.

2. Procédé selon la revendication 1, caractérisé en ce que la tension d'alimentation (U_{V}) du dispositif d'allumage est fixée par avance de manière à être plus faible pendant la phase de mesure que pendant la phase d'allumage.
